# EUROPÄISCHE PATENTSCHRIFT

(11) **EP 0 881 268 B1**
(45) Veröffentlichungstag und Bekanntmachung des Hinweises auf die Patenterteilung: **20.02.2002**
(21) Anmeldenummer: 98109395.8
(22) Anmeldetag: 23.05.1998
(51) Int. Cl.: C09B 62/022, C09B 62/04, C09B 62/20

(54) **Faserreaktive Triphendioxazinfarbstoffe, Verfahren zu deren Herstellung und ihre Verwendung**
Fiber-reactive triphendioxazine dyes, process for their preparation and the use thereof
Colorants de type triphényldioxazine réactifs sur la fibre, procédé pour leur préparation et leur utilisation

(30) Priorität: 28.05.1997 DE 19722337
(43) Veröffentlichungstag der Anmeldung: 02.12.1998
(73) Patentinhaber: DyStar Textilfarben GmbH & Co. Deutschland KG, 60318 Frankfurt am Main (DE)
(72) Erfinder: Reiher, Uwe, Dr., 65719 Hofheim (DE); Stein, Hans-Walter, 36396 Steinau a.d. Str.-Marjoss (DE)

(56) Entgegenhaltungen:
- EP-A- 0 101 665
- EP-A- 0 158 857
- EP-A- 0 739 950
- FR-A- 2 297 232
- CHEMICAL ABSTRACTS, vol. 105, no. 4, 28. Juli 1986 Columbus, Ohio, US; abstract no. 25819, K.V.SOLODOVA ET AL.: "Synthesis and visible spectra of 3,10-disubstituted 6,13-dichlorotriphenodioxazines" Seite 84; XP002076493 & ZH. PRIKL. KHIM, Bd. 59, Nr. 2, 1986, Seiten 396-401, Leningrad

## Beschreibung

Auf dem Gebiet der Triphendioxazinreaktivfarbstoffe sind zahlreiche Produkte in der Patentliteratur (z.B. EP-A-0 070 807, EP-A-0 101 665, EP-A-0 501 252, FR-A-2297232, EP-A-0158857) beschrieben, die sich insbesondere durch eine hohe Farbstärke auszeichnen. Ein Nachteil dieser Produkte besteht jedoch darin, daß die Herstellung in vielen Fällen wenig selektiv verläuft, d.h. es werden oft viele Nebenprodukte gebildet. Die resultierenden Färbungen zeigen meist nur eine geringe Brillanz. Es bestand daher ein Bedarf nach Triphendioxazinfarbstoffen, die hohe Farbstärken, hohe Brillanz und hohe Echtheiten aufweisen und sich sehr selektiv herstellen lassen.

Mit der vorliegenden Erfindung wurden nunmehr neue faserreaktive Triphendioxazinfarbstoffe der nachstehend angegebenen und definierten allgemeinen Formel (1) gefunden, deren Herstellung hochselektiv ist und deren Färbungen außerordentlich brillant sind.

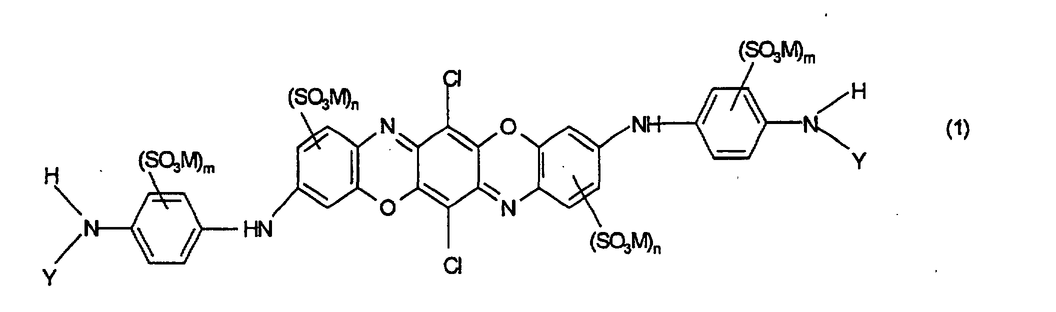

In Formel (1) bedeuten:
- M: ist Wasserstoff oder ein Alkalimetall, wie Natrium, Kalium oder Lithium;
- m: ist die Zahl 1 oder 2;
- n: ist die Zahl 1 oder 2;
- Y: ist eine Gruppe der Formel (2)

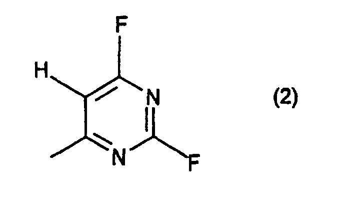

Die vorliegende Erfindung betrifft weiterhin Verfahren zur Herstellung von Verbindungen der allgemeinen Formel (1), die dadurch gekennzeichnet sind, daß man eine Verbindung der allgemeinen Formel (4) 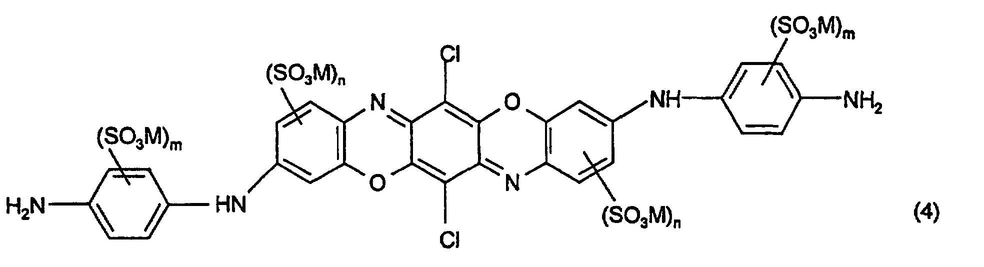 in welcher M, m und n die obengenannte Bedeutungen haben, mit einer Verbindung der Formel (5) 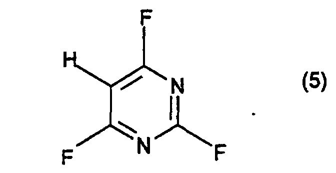 umsetzt.

Die genannte Umsetzung erfolgt im wäßrigen oder wäßrig-organischen Medium in Suspension oder Lösung. Führt man die Umsetzung in einem wäßrig-organischen Medium durch, so ist das organische Medium beispielsweise Aceton, Dimethylformamid, Dimethylsulfoxid oder N-Methyl-pyrrolidon. Vorteilhaft wird der bei der Kondensation frei werdende Fluorwasserstoff laufend durch Zugabe wäßriger Alkalihydroxide, -carbonate oder -bicarbonate neutralisiert.

Die Umsetzung des Triphendioxazins der allgemeinen Formel (4) mit 2,4,6-Trifluorpyrimidin der Formel (5) erfolgt in der Regel bei einer Temperatur zwischen 10°C und 60°C, bevorzugt bei einer Temperatur zwischen 30°C und 40°C, bei einem pH-Wert zwischen 4 und 7, bevorzugt zwischen 5 und 6, und zweckmäßig in einem molaren Verhältnis von 1:2 bis 1:4, insbesondere von 1:2 bis 1:2,2.

Die Triphendioxazinverbindung der allgemeinen Formel (4) ist in der Patentliteratur bekannt. Ihre Herstellung wird beispielsweise in der DE-A-2 302 382 beschrieben.

Die Abscheidung und Isolierung der erfindungsgemäßen Verbindungen der allgemeinen Formel (1) aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugeführt werden kann.

Die erfindungsgemäßen Verbindungen der Formel (1) haben faserreaktive Eigenschaften und besitzen sehr gute Farbstoffeigenschaften. Sie können deshalb zum Färben und Bedrucken von hydroxy- undloder carbonamidgruppenhaltigem Material, insbesondere Fasermaterial, verwendet werden. Auch können sie in Form der bei der Synthese anfallenden Lösungen, gegebenenfalls nach Zusatz einer Puffersubstanz und gegebenenfalls nach Konzentrierung, direkt als Flüssigpräparation der färberischen Verwendung zugeführt werden.

Gegenstand der vorliegenden Erfindung ist deshalb auch die Verwendung der Verbindungen der Formel (1) zum Färben von hydroxy- und/oder carbonamidgruppenhaltigen Materialien bzw. Verfahren zum Färben solcher Materialien, bei welchem man die Verbindung der Formel (1) auf das Material aufbringt oder in das Material einbringt und sie auf oder in dem Material mittels Wärme oder mit Hilfe eines alkalisch wirkenden Mittels oder Mittels beider Maßnahmen fixiert. Eingeschlossen sind hierbei die Massefärbung, beispielsweise Folien aus Polyamid, und die Druckfärbung. Bevorzugt kommen die Materialien in Form von Fasermaterialien zur Anwendung, insbesondere in Form von Textilfasern, wie in Form von Geweben und Gamen, beispielsweise in Form von Strängen und Wickelkörpern.

Hydroxygruppenhaltige Materialien sind natürliche oder synthetische hydroxygruppenhaltige Materialien, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und viskose Kunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die Verbindungen der Formel (1) lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren. So erhält man mit ihnen auf Cellulosefasern nach den Ausziehverfahren aus langer Flotte unter Verwendung von verschiedensten säurebindenden Mitteln und gegebenenfalls pH-neutralen Salzen, wie Natriumchlorid oder Natriumsulfat, Färbungen mit sehr guten Farbausbeuten sowie ausgezeichnetem Farbaufbau bei hohen Fixiergraden. Man färbt bei Temperaturen zwischen 40 und 105°C, gegebenenfalls bei Temperaturen bis zu 120°C unter Druck, und gegebenenfalls in Gegenwart von üblichen Färbereihilfsmitteln im wäßrigen Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Verbindungen der Formel (1) beschleunigenden pH-neutralen Salze können dem Bade gewünschtenfalls auch erst nach Erreichen der eigentlichen Färbetemperatur zugesetzt werden.

Nach dem Klotzverfahren werden ebenfalls, insbesondere auf Cellulosefasem, Färbungen mit ausgezeichneter Farbausbeute bei hohem Fixiergrad und mit sehr gutem Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls erhält man nach den üblichen Druckverfahren für Cellulosefasern, die entweder einphasig durchgeführt werden können, beispielsweise durch Bedrucken mit einer Natriumcarbonat oder ein anderes säurebindendes Mittel und die Verbindung der Formel (1) enthaltenden Druckpaste und durch anschließendes Dämpfen bei 100 bis 103°C, oder die zweiphasig, beispielsweise durch Bedrucken mit neutraler oder schwach saurer, das Farbmittel enthaltenden Druckpaste und anschließendes Fixieren entweder durch Hindurchführen der bedruckten Ware durch ein heißes elektrolythaltiges alkalisches Bad oder durch Überklotzen mit einer alkalischen elektrolythaltigen Klotzflotte mit anschließendem Verweilen dieses behandelten Materials oder anschließendem Dämpfen oder anschließender Behandlung mit Trockenhitze, durchgeführt werden können, farbstarke Drucke mit gutem Stand der Konturen. Der Ausfall der Drucke ist von wechselnden Fixierbedingungen nur wenig abhängig. Sowohl in der Färberei als auch in der Druckerei sind die mit den Verbindungen der Formel (1) erhaltenen Fixiergrade sehr hoch.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Verbindungen der Formel (1) auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogen-phosphat, Dinatriumhydrogenphosphat, Natriumtrichloracetat, Wasserglas oder Trinatriumphosphat.

Durch die Behandlung der Verbindungen der Formel (1) mit den säurebindenden Mitteln, gegebenenfalls unter Wärmeeinwirkung, werden diese chemisch an die Cellulosefaser gebunden; insbesondere die Cellulosefärbungen zeigen nach der üblichen Nachbehandlung durch Spülen zur Entfernung von nicht fixierten Anteilen der Verbindungen der Formel (1) ausgezeichnete Naßechtheiten, zumal sich solche nicht fixierten Anteile leicht wegen ihrer guten Kaltwasserlöslichkeit auswaschen lassen.

Die Färbungen auf Polyurethan- und Polyamidfasem werden üblicherweise aus saurem Milieu ausgeführt. So kann man beispielsweise dem Färbebad Essigsäure undloder Ammoniumsulfat oder Essigsäure und Ammoniumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifachen molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die mit den Verbindungen der Formel (1) hergestellten Färbungen und Drucke zeichnen sich durch klare Nuancen aus. Insbesondere die Färbungen und Drucke auf Cellulosefasermaterialien besitzen, wie bereits erwähnt, darüber hinaus eine hohe Farbstärke, eine gute Lichtechtheit und gute Naßechtheiten, wie Wasch-, Walk-, Wasser-, Überfärbe- und Schweißechtheiten, des weiteren eine gute Plissierechtheit, Bügelechtheit und Reibechtheit. Besonders hervorzuheben sind die mit den erfindungsgemäßen Farbstoffen auf

Cellulosefasermaterialien erzielbaren hohen Fixierausbeuten, die bei der Anwendung nach Druckverfahren und Klotzfärbeverfahren über 90 % betragen können. Ein weiterer Vorteil der Verbindungen der Formel (1) besteht in der leichten Auswaschbarkeit der beim Druck- oder Färbevorgang nicht fixierten Anteile, wodurch der Waschvorgang der bedruckten oder gefärbten Cellulosefasermaterialien mit geringen Waschflottenmengen und gegebenenfalls einer energiesparenden Temperaturführung während des Waschvorganges bewerkstelligt werden kann.

In den nachfolgenden Beispielen bedeuten Teile Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säure angegeben; im allgemeinen werden sie in Form ihrer Alkalimetallsalze, wie Lithium-, Natrium oder Kaliumsalze, hergestellt und isoliert und in Form ihrer Salze zum Färben verwendet. Ebenso können die in den nachfolgenden Beispielen in Form der freien Säure genannten Ausgangsverbindungen und Komponenten als solche oder in Form ihrer Salze, vorzugsweise Alkalimetallsalze, in die Synthese eingesetzt werden.

Das für den erfindungsgemäßen Farbstoffe angegebenen Absorptionsmaxima (λₘₐₓ) im sichtbaren Bereich wurden anhand ihrer Alkalimetallsalze in wäßriger Lösung ermittelt.

### Beispiel 3

Eine Lösung aus 88,7 Teilen der Triphendioxazinverbindung der Formel 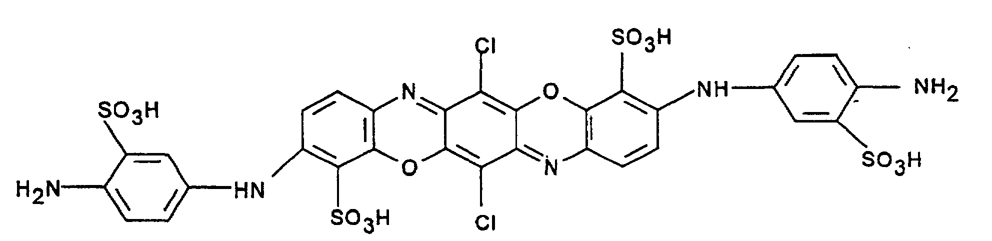 in 700 Teilen Wasser wird mittels Natriumcarbonat auf den pH-Wert von 5,3 bis 5,5 gestellt und auf 40°C erwärmt. Innerhalb von 30 Minuten werden 29,5 Teile 2,4,6-Trifluorpyrimidin zugetropft, wobei der pH-Wert mit Hilfe von Natriumcarbonat bei 5,3 bis 5,5 gehalten wird.

Man rührt noch 4 Stunden bei 40°C, kühlt auf Raumtemperatur ab und isoliert das Produkt durch Aussalzen mit Natriumchlorid. Es besitzt, in Form der freien Säure geschrieben, die Formel 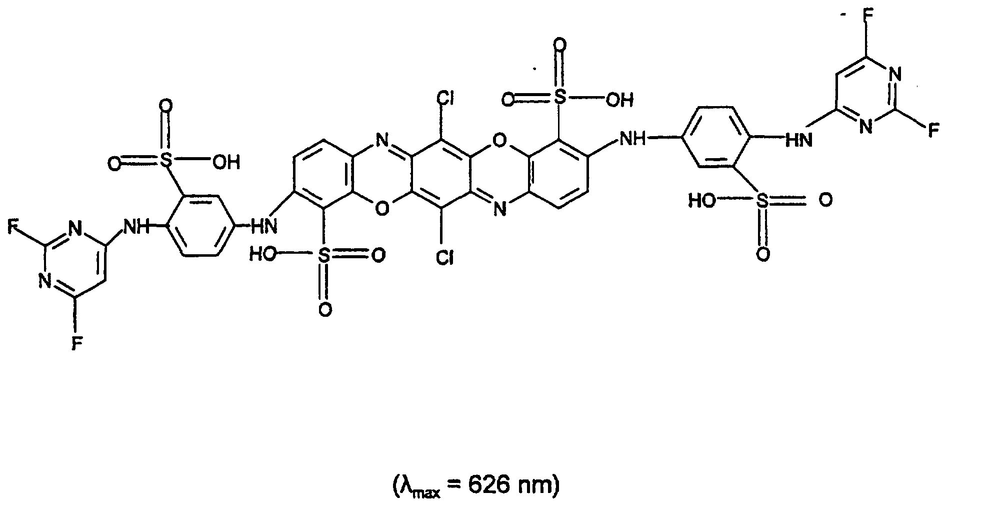 und liefert nach den für faserreaktive Farbstoffe üblichen Färbe- und Druckverfahren auf den in der Beschreibung genannten Materialien, insbesondere Cellulosefasermaterialien, wie beispielsweise Baumwolle, farbstarke blaue Färbungen und Drucke mit guten Echtheitseigenschaften, von denen insbesondere die gute Lichtechtheit hervorgehoben werden kann.

## Patentansprüche

1. Verbindungen der allgemeinen Formel (1) 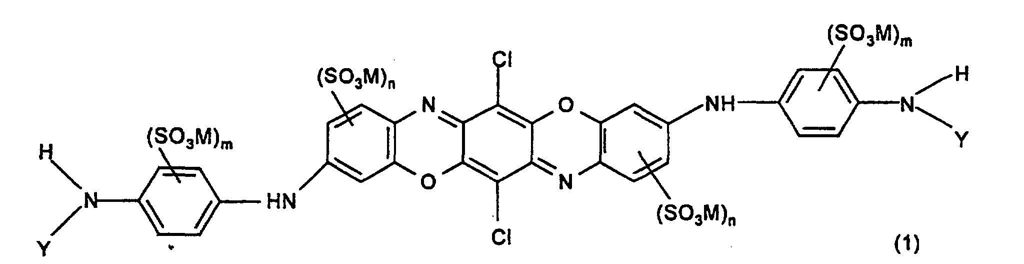 in welcher bedeuten:
M ist Wasserstoff oder ein Alkalimetall;
m ist die Zahl 1 oder 2;
n ist die Zahl 1 oder 2;
Y ist eine Gruppe der Formel (2)

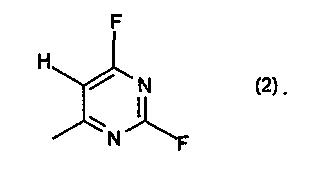

2. Verfahren zur Herstellung einer Verbindung nach Anspruch 1, **dadurch gekennzeichnet, daß** man eine Verbindung der Formel (4) 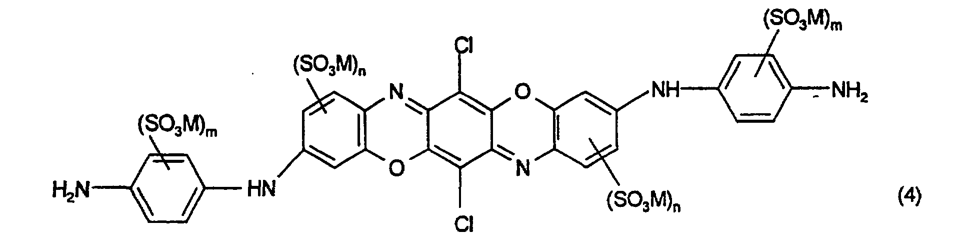 in welcher M, m und n die in Anspruch 1 genannten Bedeutungen haben, mit einer Verbindung der Formel (5) 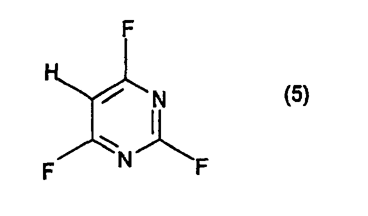 umsetzt.

3. Verfahren nach Anspruch 2, **dadurch gekennzeichnet, daß** die Umsetzung des Triphendioxazins der Formel (4) mit 2,4,6-Trifluorpyrimidin bei einer Temperatur zwischen 10 und 60°C und bei einem pH-Wert zwischen 4 und 7 erfolgt.

4. Verwendung einer Verbindung von Anspruch 1 zum Färben und Bedrucken von hydroxy- undloder carbonamidgruppenhaltigen Materialien, insbesondere Fasermaterial.

5. Verfahren zum Färben von hydroxy- undloder carbonamidgruppenhaltigem Material, insbesondere Fasermaterial, bei welchem man einen Farbstoff auf das Material aufbringt und den Farbstoff auf dem Material mittels Wärme oder mit Hilfe eines alkalisch wirkenden Mittels oder mittels beider Maßnahmen fixiert, **dadurch gekennzeichnet, daß** man als Farbstoff einen Farbstoff von Anspruch 1 einsetzt.

## Claims

1. Compounds of the general formula (1) 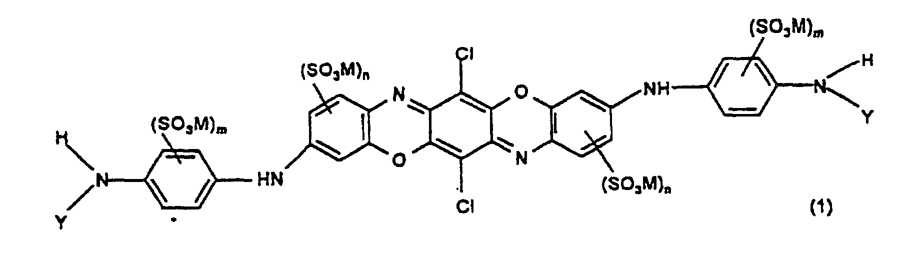 where
M is hydrogen or an alkali metal;
m is 1 or 2;
n is 1 or 2;
Y is a group of the formula (2)

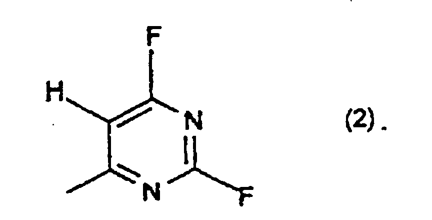

2. Process for preparing a compound as claimed in claim 1, **characterized in that** a compound of the formula (4) 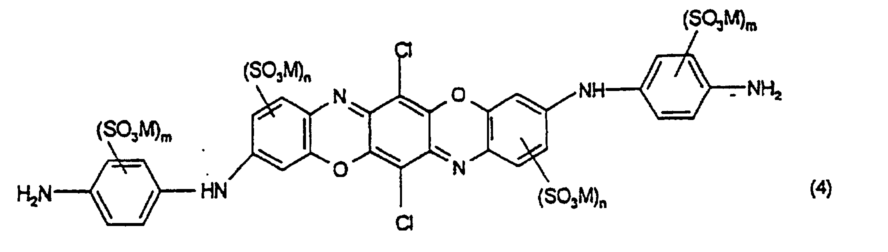 where M, m and n are each as defined in claim 1, is reacted with a compound of the formula (5)

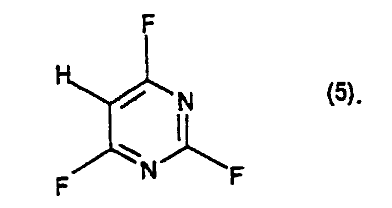

3. Process according to claim 2, **characterized in that** the reaction of the triphendioxazine of the formula (4) with 2,4,6-trifluoropyrimidine is effected at a temperature between 10 and 60°C and at a pH between 4 and 7.

4. Use of a compound of claim 1 for dyeing and printing hydroxyl- and/or carboxamido-containing materials, especially fiber material.

5. Process for dyeing hydroxyl- and/or carboxamido-containing material, especially fiber material, by applying a dye to the material and fixing the dye on the material by heat or by means of an alkaline agent or by both measures, **characterized in that** the dye used is a dye of claim 1.

## Revendications

1. Composés de formule générale (1) 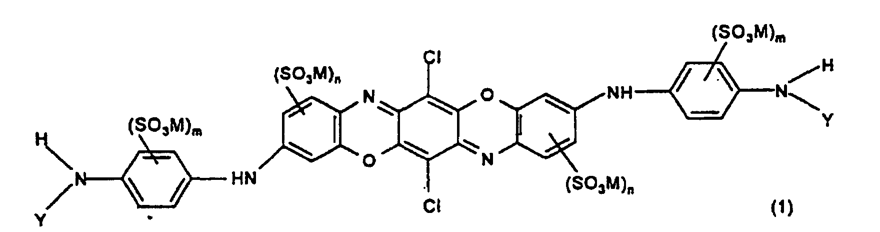 dans laquelle :
M est un atome d'hydrogène ou un métal alcalin ;
m est le nombre 1 ou 2 ;
n est le nombre 1 ou 2 ;
Y est un groupe de formule (2)

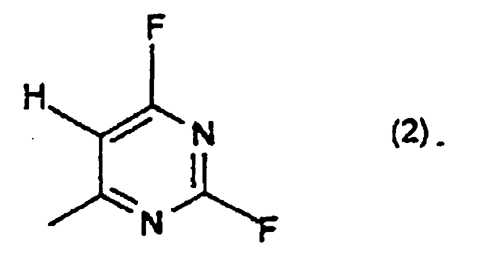

2. Procédé pour la préparation d'un composé selon la revendication 1, **caractérisé en ce qu'**on fait réagir un composé de formule (4) 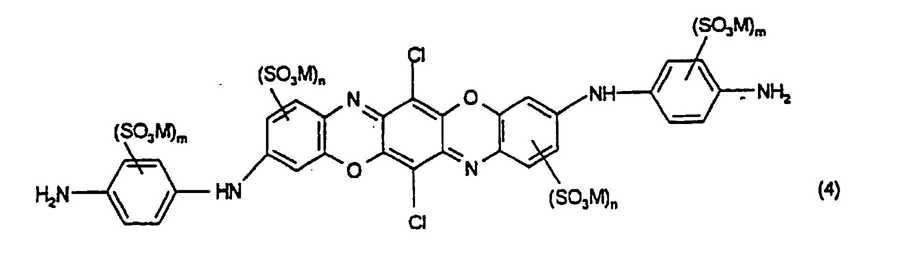 dans laquelle M, m et n ont les significations données dans la revendication 1, avec un composé de formule (5)

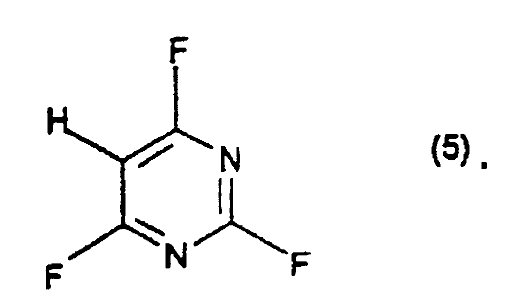

3. Procédé selon la revendication 2, **caractérisé en ce que** la réaction de la triphénodioxazine de formule (4) avec la 2,4,6-trifluoropyrimidine s'effectue à une température comprise entre 10 et 60°C et à un pH compris entre 4 et 7.

4. Utilisation d'un composé selon la revendication 1, pour la teinture et l'impression de matériaux contenant des groupes hydroxy et/ou carbamoyle, en particulier d'un matériau fibreux.

5. Procédé pour la teinture de matériau contenant des groupes hydroxy et/ou carbamoyle, en particulier de matériau fibreux, dans lequel on applique un colorant sur le matériau et on fixe le colorant sur le matériau au moyen de chaleur ou à l'aide d'un agent à action alcaline, ou à l'aide de ces deux moyens, **caractérisé en ce qu'**on utilise comme colorant un colorant de la revendication 1.
